# EUROPEAN PATENT APPLICATION

(11) **EP 1 630 696 A1**
(43) Date of publication of application: **01.03.2006**
(21) Application number: 05104478.2
(22) Date of filing: 25.05.2005
(51) Int. Cl.: G06F 17/30

(54) **Automated system for content acquisition using a web portal**

(30) Priority: 31.08.2004 US 931478
(71) Applicant: MICROSOFT CORPORATION, Redmond, WA 98052 (US)
(72) Inventor: O'Riordan, Irene, Redmond, WA 98052 (US); Ledbetter-Hannibal, Jacquie A., Redmond, WA 98052 (US); Abbar, Mohamed A., Redmond, WA 98052 (US); Kinch, Paul, Redmond, WA 98052 (US); Leung, Thomas A, Redmond, WA 98052 (US)
(74) Representative: Zimmer, Franz-Josef

(57) **Abstract**

Described are techniques and mechanisms that implement an automated process for content acquisition using a Web portal. The process allows a content provider to visit a location on a wide area network and interact with one or more resources to upload a document. Within the process, several tasks are automated that would otherwise be performed by humans. For example, the document is automatically coupled with any legal terms corresponding to the submission and archived at the time of the submission. In this way, the uncertainty of which terms apply to the submission is avoided. In addition, the content is automatically connected to an editorially managed content review and publishing system.

## Description

### FIELD

Various embodiments described below relate generally to the electronic transfer of data over a wide area network, and more particularly but not exclusively to an automated system for data acquisition using a Web portal.

### BACKGROUND

The Internet is an extremely efficient mechanism for disseminating information or documents to very many users, even around the world. Indeed, today most sophisticated software developers integrate the Internet into their software products in some fashion. In fact, many software developers today make available over the Internet some mechanism for upgrading or enhancing their software products. One example of such a mechanism is used today where templates or other standardized documents are made available for download by users of a particular developer's suite of productivity software. A user of the productivity software may desire a particular form or template that was not included with the productivity software as purchased. The software developer may make available additional templates or forms at a location on the Internet that is accessible through the productivity suite. In one example, supplemental calendar templates or special budgeting forms may be made available online.

Users of the productivity suite appreciate the additional content that is made available by the software developer. This type of follow-on service helps to make the users appreciate their investment in the software, thus providing a competitive advantage to the developer. In many cases, the content being provided is easily generated by the developer. For example, the maker of an anti-virus program is likely the best candidate to create new virus definitions. However, in some cases the developer is not the best source of the content Take for example the case of a software developer that offers an office productivity solution. The developer may desire to offer supplemental business templates to enhance the software users' efficiency. However, the developer of the productivity suite, being a programmer by trade, is likely not the best source for generating the business templates. In those cases, the developer may partner with third-party providers, who may be individuals, that are experts in particular subject areas to provide specialized content. These arrangements leverage specialized knowledge by allowing each party to focus on their particular area of expertise, developing software or creating high-quality content. Often these partnerships create symbiotic relationships by exposing content providers to consumers that would otherwise be unaware of their services, and by allowing software developers to provide high-quality content at little or no charge.

Although mostly beneficial, these arrangements do suffer from at least one problem: the current state of technology renders the process of accumulating content from several disparate sources particularly onerous and labor-intensive. In other words, a software developer that chooses to partner with content providers must engage actual humans to interface with humans at each potential content provider. The actual exchange of content is handled using ad-hoc mechanisms for data exchange. In other words, e-mail messaging may be the communication means of choice with one content provider, while another may choose to deliver data on a digital medium, such as a Compact Disk. Having to handle each relationship in a different manner renders the process inefficient. Moreover, the delivery of content is routinely coupled with a licensing agreement between the parties. These licenses typically change often, so it can sometimes be difficult to determine exactly what terms are attached to a particular submission because it can sometimes be difficult to determine exactly when the submission occurred. In addition, the process relies on the diligence of a human to simultaneously couple the delivery of the content with the execution of a license, and humans are given to err.

A mechanism that avoids the labor-intensive process of manually accumulating content for inclusion in a software developers online distribution service has eluded those skilled in the art, until now.

### SUMMARY

The present invention is directed at techniques and mechanisms that implement an automated process for content acquisition using a Web portal. Briefly stated, the process allows a content provider to visit a location on a wide area network and interact with one or more resources to upload a document. Within the process, several tasks are automated that would otherwise be performed by humans. For example, the document is automatically coupled with any legal terms corresponding to the submission and archived at the time of the submission. In this way, the uncertainty of which terms apply to the submission is avoided, and descriptive metadata about the submission is automatically collected from the content provider at the time of submission. In addition, the content is automatically connected to an editorially managed content review and publishing system.

### BRIEF DESCRIPTION OF THE DRAWINGS

Non-limiting and non-exhaustive embodiments are described with reference to the following figures, wherein like reference numerals refer to like parts throughout the various views unless otherwise specified.

Figure 1 is a functional block diagram generally illustrating a system for performing automated content acquisition.

Figure 2 is a functional block diagram illustrating in greater detail the web portal introduced above in conjunction with Figure 1.

Figure 3 is a functional block diagram illustrating in greater detail the backend server introduced above in conjunction with Figure 1.

Figure 4 is a conceptual diagram illustrating a sample submission form that may be used at the developer site to submit a document to a software developer.

Figure 5 is an operational flow diagram generally illustrating a process 500 for automating the acquisition of content

Figure 6 illustrates a sample computing device that may be used in implementations of the present invention.

### DETAILED DESCRIPTION

The following description is directed at an automated content acquisition system. Generally stated, a Web portal is provided through which content providers may submit documents to an entity (e.g. a software developer), and the submission is archived together with a then-current version of the applicable terms of submission. Specific implementations of this general concept will now be described.

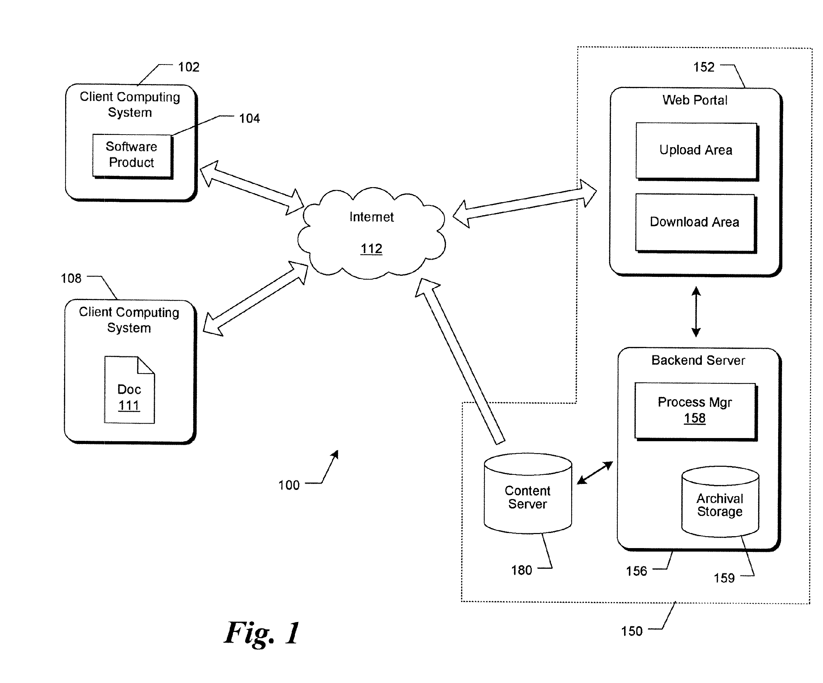

Figure 1 is a functional block diagram generally illustrating a system 100 for performing automated content acquisition. Included in the system 100 are a client computing system 102, a computing system under control of a content provider 108, and a developer site 150. Each of these elements is connected over a wide area network, such as the Internet 112.

The client computing system 102 includes an installed software application 104 that is manufactured and marketed by the software developer. In one example, the software application 104 is a productivity suite that includes a word processing program, a spreadsheet program, or the like. In addition, the software application 104 is configured to retrieve enhanced content from a content server 180 maintained by the software developer. Examples of the enhanced content include new templates or forms, or the like.

The content provider 108 is a computing system under the control of an entity or individual that provides content to the software developer for inclusion in the content server 180. Throughout this document, the term "content provider" may be used interchangeably to indicate either the content provider computing system 108 or the entity or individual operating the content provider computer system 108. This is to simplify this discussion, and no importance or relevance is intended or should be inferred by the interchangeable usage of the term.

In this example, the content provider 108 provides to the software developer a document 111 that represents enhanced content. The content provider typically has particular expertise in some area, and provides enhanced content to the software developer in that area. In one particular example, the content provider may have particular expertise in the legal industry, and may provide to the software developer legal forms or templates. Similarly, the content provider may have particular expertise in the real estate industry, and may provide to the software developer real estate forms, or the like. In this example, the document 111 represents the enhanced content that the content provider 108 provides to the software developer. Although referred to here as a "document," the content being provided may take many different forms, such as clipart, textual help information, and the like. For the purpose of this application, the term "document" means any digital file or compilation of data that includes content that may be served from a Web site.

The developer site 150 is a location available over the Internet 112 to other computing systems to access certain information made available by the software developer. For instance, the software developer makes available enhanced content for the software application 104 from the content server 180. As mentioned above, the content may take the form of templates or other forms that may be used by the software application 104 but which were not installed with the software application 104 originally. The content server 180 in this example may be accessible by general users of the Internet 112, such as the client computing system 102. In addition, a user of the software application 104 on the client computing system 102 may access the content on the content server 180 through the ordinary use of the software application 104.

The developer site 150 also includes a web portal 152 that several content providers, such as content provider 108, may use to submit documents to the software developer for inclusion on the content server 180. Unlike the content server 180, the web portal 152 is accessible over the Internet 112 by select users, perhaps using an authentication or login mechanism. The web portal 152 may be used to make available development information about the software application to the content providers. For instance, the software developer may make available a software development kit ("SDK") for download from the web portal 152, and a frequently asked questions area that answers many development-related questions. In addition, the web portal 152 may provide an upload mechanism that allows the content provider 108 to upload content to the developer site 150.

The developer site 150 also includes a backend server 156 which is a computing system that is not directly accessible over the Internet 112. The backend server 156 includes a process manager 158 that is operative to control the automated process of acquiring content. The backend server 156 is coupled to both the web portal 152 and the content server 180 using conventional networking mechanisms. The backend server 156 includes archival storage 159 permanently for storing information that is not intended for public access over the Internet 112.

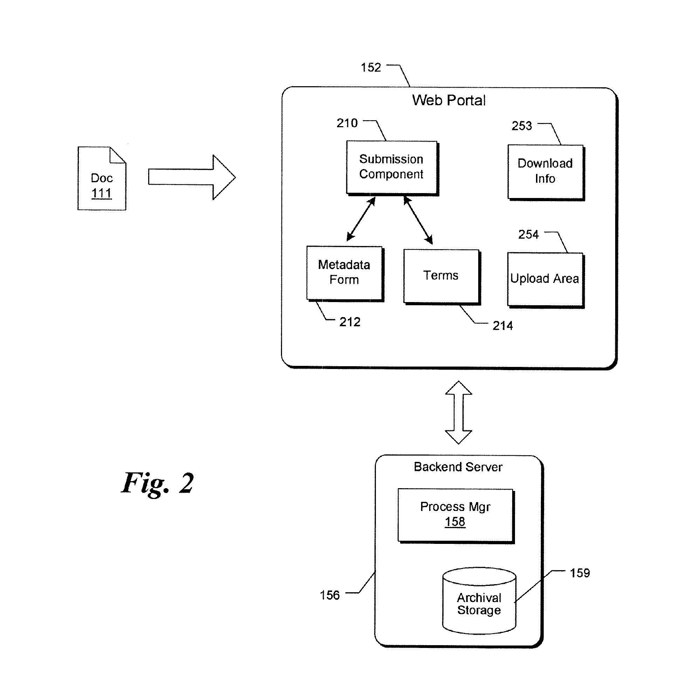

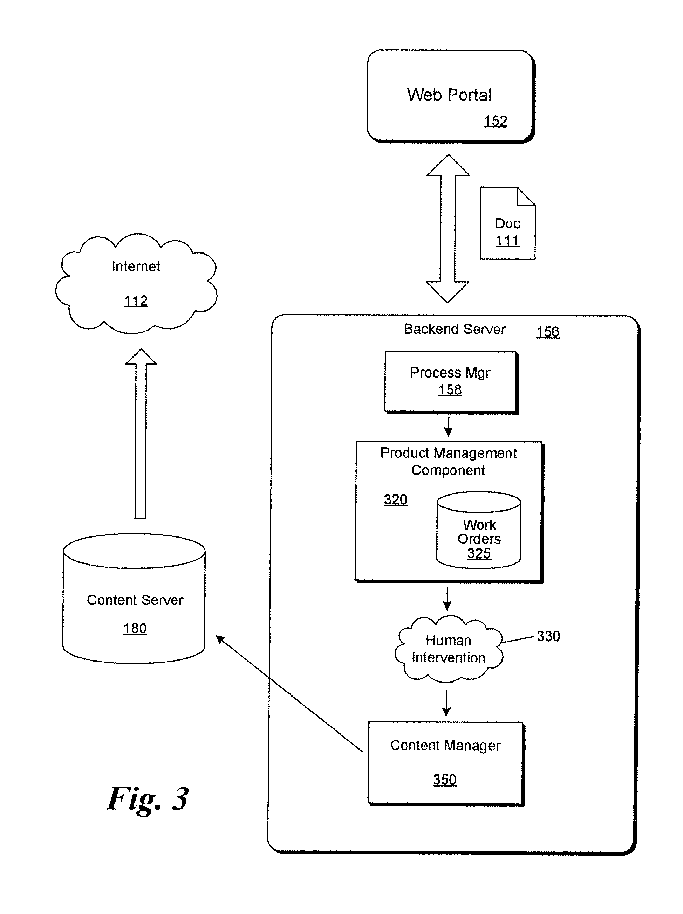

Although generally introduced here, each of the components of the developer site 150 will be discussed in greater detail later in conjunction with Figure 2 and Figure 3. Briefly stated, the content provider 108 accesses the web portal 152 on the developer site 150 and uploads the document 111 to the web portal 152. Upon receipt of the document 111, the web portal 152 notifies the process manager 158 of the submission. The process manager 158 archives to the archival storage 159 a copy of the document 111 together with any contactual terms that were agreed to in conjunction with the submission of the document 111. In addition, the process manager 158 automatically initiates "a publishing process" for preparing and including the document 111 into the content server 180. The particulars of this publishing process are generally described below.

Figure 2 is a functional block diagram illustrating in greater detail the web portal 152 introduced above in conjunction with Figure 1. The web portal 152 includes several components to facilitate both the upload of content as well as downloading certain development information made available by the software developer. For instance, a download information component 253 is used by the web portal 152 to make available certain information to content providers. For example, a software developers' kit ("SDK") may be maintained at the web portal 152 for download by content providers with detailed instructions about the proper form and content of any content that the content providers may submit. Content providers may connect to the web portal 152 and download the most recent version of the SDK using the download information component 253. The download information component 253 may also provide other information, such as answers to frequently asked questions and the like.

A submission component 210 is available to the content providers to upload content to the web portal 152. The submission component 210 may be one or more controls or other applets embedded on a markup language page available at the web portal 152. Activating the submission component 210 may present to the content provider 108 certain contractual terms 214 to which the content provider must agree in conjunction with submitting the content. The contractual terms 214 are available for viewing by the content provider in conjunction with or prior to allowing the content provider to a document 111 to the web portal 152.

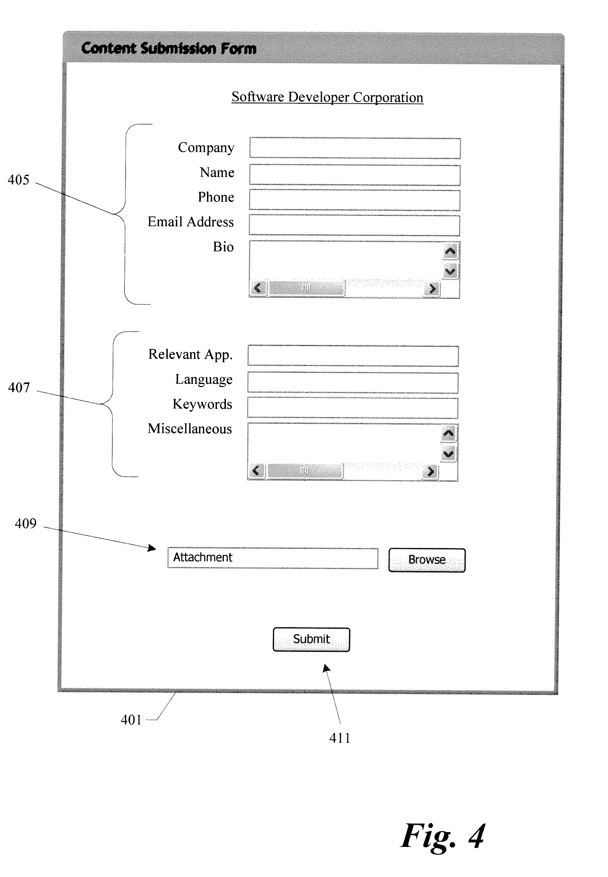

The web portal 152 may also present the content provider with a metadata form 212 for the purpose of gathering certain metadata about the content provider's submission. For example, the metadata form 212 may be used to prompt the content provider for the content provider's name, various information about the document 111, keywords that may be used in a word search for the document, and the like. One particular example of the metadata form 212 is illustrated in Figure 4 and described below.

Activating a link or other button on the submission component 210 causes the document 111, the information gathered using the metadata form 212, and the contractual terms 214 to be submitted to the process manager 158. In response, the process manager 158 archives a copy of the document 111 as well as at least the contractual terms 214 into a permanent archival storage 159. In this way, there can be no future confusion about which particular terms attached to the submission of the document 111 or when the submission formally occurred. Advantageously, the automatic archiving of the contractual terms 214 with the document 111 contemporaneously with the submission of the document 111 overcomes the need for a human to remember to collect and store the then-current terms in connection with the particular submission.

Figure 3 is a functional block diagram illustrating in greater detail the backend server 156 introduced above in conjunction with Figure 1. The backend server 156 includes components configured to facilitate an automated process for acquiring enhanced content, such as document 111, from a content provider. As discussed above, the web portal 152 receives the document 111 from a content provider and presents it to the process manager 158, which then initiates an automated publishing process for preparing the document 111 for inclusion into the content server 180.

More specifically, the process manager 158 initiates the publishing process by notifying a product management component 320 of the submission. The product management component 320 is responsible for programmatically scheduling particular "tasks" to be performed in conjunction with the development of the software application. The product management component 320 includes a work order database 325 in which are created entries that equate to particular tasks that need to be performed.

It will be appreciated that the creation of a task within the work order database 325 causes a notification to be generated for a particular individual responsible for handling tasks of that type. In other words, creating a task in the work order database 325 operates as a notification to a human being to evaluate the document 111 that has been submitted. The product management component 320 may use the metadata gathered through the automated acquisition process to help identify the particular individual to assign to the task. The product management component 320 maintains resource information 327 that describes the capabilities of individuals associated with the software developer, as well as other information, that may be used to match individuals to documents that are submitted.

At this point, human intervention 330 could be employed to evaluate the document 111 for inclusion in the content server 180. In other words, prior to allowing the document 111 to be exposed by the content server 180, it may be beneficial to involve a person with particular expertise to evaluate the appropriateness of the document. It should be noted that the use of human intervention 330 at this point (i.e., during the publishing process) differs from the use of human intervention to facilitate the submission of the document 111 itself (i.e., during the acquisition process). For instance, at this juncture, it can be assumed that the document 111 that has been submitted is archived in conjunction with any contractual terms that have attached to its submission. In addition, a standard set of metadata has already been collected for the document 111, and that metadata can be used to help identify the individual best suited to perform the human intervention process 330. The human intervention 330 may include such events as reformatting the document 111, minor or major edits to the document 111, a subjective evaluation of the quality of the docket 111, and the like.

At the conclusion of the human intervention 330, the document 111 may be passed to a content manager 350 that is responsible for making any final publishing modifications to the document 111, and for publishing the document 111 to the content server 180 for access by users of the Internet 112. At this point, the document 111 may be downloaded by the general public, and more specifically, by users of the software application 104.

Figure 4 is a conceptual diagram illustrating a sample submission form 401 that may be used at the developer site 150 to submit a document to a software developer. The submission form 401 may be implemented as one or more markup-based documents served by the web portal 152. A content provider may be prompted with the submission form 401 after accepting certain contractual terms associated with content submission to the software developer. The submission form 401 includes data entry fields associated with metadata to be collected and associated with the submission. To that end, the submission form 401 includes a content provider information section 405 where information related to the identity of the content provider is collected. For example, the identity information may include the name of the company and person submitting the document, contact information (e.g., phone numbers, mailing and e-mail addresses, and the like), and biographic information about the creator of the document.

The submission form 401 also includes a document information section 407 where information is collected that describes the document or submission itself. For example, the document information may identify the particular application to which the document pertains (e.g., a word processor, spreadsheet program, database program, contact management program, or the like), the language of the document, keywords that may be used to describe the content of the document, and perhaps some miscellaneous comments that the submitter wishes to be included or considered along with the submission.

An attached file portion 409 is provided to allow the user to navigate to a location on the user's local computer or network and identify the particular location of the document being submitted. The attached file portion 409 once the submission form 401 is complete, the user may perform the submission by activating a submit button 411.

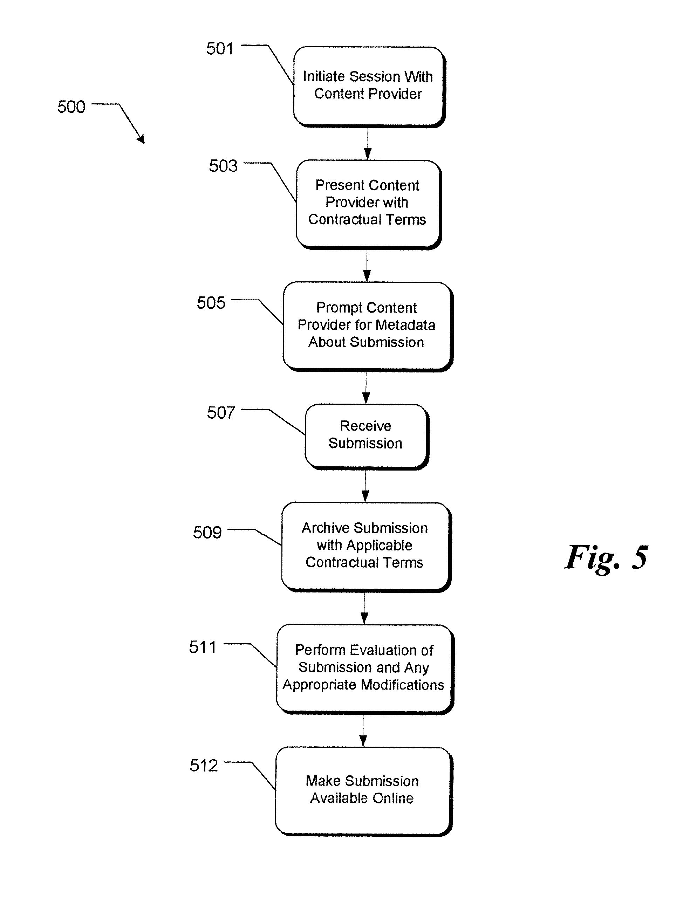

Figure 5 is an operational flow diagram generally illustrating a process 500 for automating the acquisition of content. The process 500 may be implemented by one or more computing systems interconnected over a wide area or local area network. The process 500 begins at block 501 when a session is initiated with a remote content provider. For example, a communications session may be established between a computing system within the software developer's network and a remote computing system operated by the content provider. The purpose of the session is for the content provider to provide a document (enhanced content) to the software developer.

At block 503, the content provider is presented with contractual terms that apply to the submission of the document. Typically, the content provider may be required to read and accept the terms of a license agreement, or the like, prior to proceeding with the submission of the document. For example, the contractual terms may address ownership of the document and the right to modify and distribute the document, and the like.

At block 505, the content provider is prompted for metadata about the submission. The metadata generally falls into two categories: information about the content provider, and information about the submission. The information about the content provider may include the content provider's name, the name of the individual providing the content, contact information for the content provider, and the like. The information about the submission may include the identity of the software application to which the submission pertains, the language (if applicable) of the submission, and the like.

At block 507, the software developer receives the submission. It is envisioned that the content provider provides the document using ordinary file or content transfer mechanisms.

At block 509 the document is archived in conjunction with the contractual terms that apply to the submission. As mentioned above, automatically archiving the then-current contractual terms together with a copy of the submission not only simplifies the amount of work that a human must perform, it also avoids later disputes over which particular version of the terms apply, if the terms later change.

At block 511, an evaluation of the submission is performed and any appropriate modifications to the document are performed as part of a publishing process. The modifications may include formatting of the document, or otherwise putting the submission inappropriate format. The publishing process may be performed, at least partially, by a human.

At block 512, the appropriately formatted or modified submission is published to the content server where it is made available for download over the Internet.

Although the above processes are illustrated and described sequentially, in other embodiments, the operations described in the blocks may be performed in different orders, multiple times, and/or in parallel.

### ILLUSTRATIVE OPERATING ENVIRONMENT

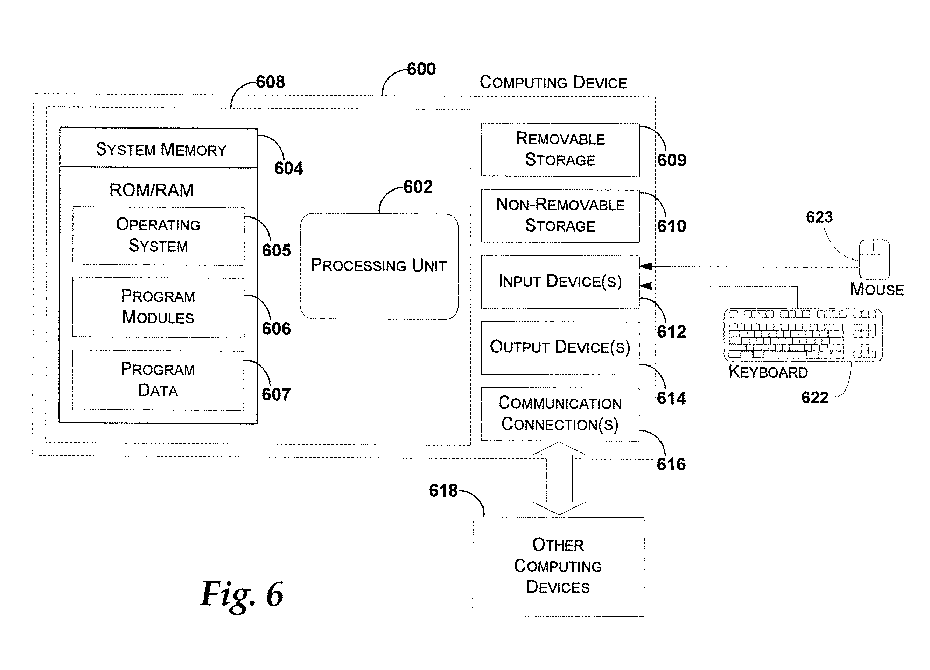

The various embodiments described above may be implemented in general computing systems adapted as either servers or clients.. An example computer environment suitable for use in implementation of the invention is described below in conjunction with Figure 6.

### Illustrative Computing Environment

Figure 6 illustrates a sample computing device that may be used in implementations of the present invention. With reference to Figure 6, one exemplary system for implementing the invention includes a computing device, such as computing device 600. In a very basic configuration, computing device 600 typically includes at least one processing unit 602 and system memory 604. Depending on the exact configuration and type of computing device, system memory 604 may be volatile (such as RAM), non-volatile (such as ROM, flash memory, etc.) or some combination of the two. System memory 604 typically includes an operating system 605, one or more program modules 606, and may include program data 607. This basic configuration of computing device 600 is illustrated in Fig. 6 by those components within dashed line 608.

Computing device 600 may have additional features or functionality. For example, computing device 600 may also include additional data storage devices (removable and/or non-removable) such as, for example, magnetic disks, optical disks, or tape. Such additional storage is illustrated in Fig. 6 by removable storage 609 and non-removable storage 610. Computer storage media may include volatile and nonvolatile, removable and non-removable media implemented in any method or technology for storage of information, such as computer readable instructions, data structures, program modules, or other data. System memory 604, removable storage 609 and non-removable storage 610 are all examples of computer storage media. Computer storage media includes, but is not limited to, RAM, ROM, EEPROM, flash memory or other memory technology, CD-ROM, digital versatile disks ("DVD") or other optical storage, magnetic cassettes, magnetic tape, magnetic disk storage or other magnetic storage devices, or any other medium which can be used to store the desired information and which can be accessed by computing device 600. Any such computer storage media may be part of device 600. Computing device 600 may also have input device(s) 612 such as keyboard 622, mouse 623, pen, voice input device, touch input device, scanner, etc. Output device(s) 614 such as a display, speakers, printer, etc. may also be included. These devices are well known in the art and need not be discussed at length here.

Computing device 600 may also contain communication connections 616 that allow the device to communicate with other computing devices 618, such as over a network. Communication connections 616 is one example of communication media. Communication media may typically be embodied by computer readable instructions, data structures, program modules, or other data in a modulated data signal, such as a carrier wave or other transport mechanism, and includes any information delivery media. The term "modulated data signal" means a signal that has one or more of its characteristics set or changed in such a manner as to encode information in the signal. By way of example, and not limitation, communication media includes wired media such as a wired network or direct-wired connection, and wireless media such as acoustic, RF, infrared and other wireless media. The term computer readable media as used herein includes both storage media and communication media.

While example embodiments and applications have been illustrated and described, it is to be understood that the invention is not limited to the precise configuration and resources described above. Various modifications, changes, and variations apparent to those skilled in the art may be made in the arrangement, operation, and details of the methods and systems of the present invention disclosed herein without departing from the scope of the claimed invention.

## Claims

1. A computer-implemented method for content acquisition, comprising:
initiating a content acquisition event for the automated acquisition of a document from a content provider, the document being associated with a software product;
prompting the content provider with contractual terms that apply to the content acquisition event;
receiving the document from the content provider, and
automatically archiving the contractual terms in conjunction with the document in a permanent archival storage.

2. The computer-implemented method recited in claim 1, further comprising automatically initiating a publishing process for publishing the document to a content server to make the document available over a wide area network.

3. The computer-implemented method recited in claim 1, wherein initiating the content acquisition event comprises receiving a request to initiate a session between a host web portal and a remote device, the remote device being under the control of the content provider.

4. The computer-implemented method recited in claim 3, wherein the web portal makes available for download information related to the development of the software product.

5. The computer-implemented method recited in claim 4, wherein the information available for download includes answers to frequently asked questions about the development of the software product

6. The computer-implemented method recited in claim 4, wherein the information available for download includes a developers' kit with documentation and other programming tools to aid in the development of the software product.

7. The computer-implemented method recited in claim 4, wherein the software product comprises a productivity sweet of software applications.

8. The computer-implemented method recited in claim 1, wherein the document comprises a template configured for use with the software product.

9. The computer-implemented method recited in claim 1, wherein the document comprises content that may be consumed by the software product to make available functionality that was not originally included with the software product

10. A computer-readable medium encoded with computer-executable instructions for performing the computer-implemented method recited in claim 1.

11. A computer-readable medium having computer-executable instructions for content acquisition, the instructions comprising:
in response to an initiation of a session between a content provider and a web portal, prompting the content provider with contractual terms that apply to the content acquisition;
in response to an acceptance of the contractual terms, receiving the content from the content provider;
archiving the content and the contractual terms in permanent archival storage; and
initiating a publishing process for making the content available over a wide area network.

12. The computer-readable medium recited in claim 11, wherein the session comprises a communications session between the content provider and the web portal over a global area network.

13. The computer-readable medium recited in claim 11, wherein the content comprises a document related to a software product.

14. The computer-readable medium recited in claim 13, wherein the contractual terms comprise a set of terms that govern the respective rights and obligations of an operator of the content provider and a developer of the software product.

15. The computer-readable medium recited in claim 13, wherein the document comprises a selected one or more of a group comprising a template, a form, a clipart image, and textual help information.

16. The computer-readable medium recited in claim 11, wherein the publishing process comprises a human intervention portion where a person evaluates the content.

17. The computer-readable medium recited in claim 16, wherein the person modifies the content to put the content in form for publishing to a content server.

18. The computer-readable medium recited in claim 11, wherein the publishing process comprises a publishing portion where the content is published to a content server where it is made available for access over the wide area network.

19. A computer-readable medium encoded with computer-executable components for content acquisition, the components comprising:
a web portal including a download area and an upload area, the download area including information related to the development of a software product, the upload area being configured to receive a document from a content provider; and
a backend server including a process manager operative to receive the document from the web portal and to contemporaneously archive the document and then-current contractual terms associated with the content acquisition, the process manager being further operative to initiate a publishing process.

20. The computer-readable medium recited in claim 19, wherein the document comprises a template configured for use with the software product.

21. The computer-readable medium recited in claim 19, wherein the document comprises content that may be consumed by the software product to make available functionality that was not originally included with the software product.

22. The computer-readable medium recited in claim 19, wherein the information available for download includes a developers' kit with documentation and other programming tools to aid in the development of the software product.

23. The computer-readable medium recited in claim 19, wherein the backend server further includes a permanent archival storage mechanism.

24. The computer-readable medium recited in claim 19, wherein the upload area further comprises a submission form configured to receive metadata from the content provider, the metadata including information that describes the document.

25. The computer-readable medium recited in claim 24, wherein the metadata further comprises information that describes a content provider.
